# EUROPEAN PATENT APPLICATION

(11) **EP 4 819 356 A1**
(43) Date of publication of application: **07.10.2026**
(21) Application number: 25833611.4
(22) Date of filing: 02.07.2025
(51) Int. Cl.: H01M 50/502, H01M 50/507, H01M 50/509

(54) **BATTERY PACK AND ELECTRICAL DEVICE INCLUDING SAME**

(30) Priority: 03.07.2024 KR 20240087647
(71) Applicant: LG Energy Solution, Ltd., Seoul 07335 (KR)
(72) Inventor: YANG, Seong-Hwan, Daejeon 34122 (KR); LEE, Young-Kyu, Daejeon 34122 (KR); JEONG, Dong-Gyu, Daejeon 34122 (KR)
(74) Representative: Plasseraud IP
(86) International application number: PCT/KR2025/009441
(87) International publication number: WO 2026/010366

(57) **Abstract**

A battery pack according to the present disclosure may include: a plurality of battery cells including a first electrode and a second electrode; a cell frame configured to support and store the plurality of battery cells; a power busbar disposed at an outermost region on one side of the cell frame, and electrically connected to the battery cells in one direction by a plurality of connecting wires; and a power busbar seating portion including a power busbar guide rib protruding in one direction to guide the seating of the power busbar, and configured such that the power busbar is seated thereon, wherein one surface of the power busbar and one end of the power busbar guide rib may have the same height.

## Description

### TECHNICAL FIELD

The present disclosure relates to a battery pack and an electrical device including the same and, more specifically, to a battery pack capable of performing stable high-power discharge while maintaining a fusing function, and an electrical device including the same.

This application is based on and claims priority from Korean Patent Application No. 10-2024-0087647, filed on July 03, 2024, with the Korean Intellectual Property Office, the disclosure of which is incorporated herein in its entirety by reference.

### BACKGROUND ART

Recently, the demand for portable electronic products such as laptops, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway
Currently commercialized secondary batteries include nickel-cadmium batteries, nickel-metal hydride batteries, nickel-zinc batteries, and lithium-ion secondary batteries. Among them, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. These lithium-ion secondary batteries are assembled into a compact structure by overlapping or stacking multiple battery cells themselves or multiple battery cells mounted in cartridges, and then the structures may be electrically connected to configure a battery module or battery pack.

Recently, research and development has been actively conducted on battery packs comprised of a single module or cell assembly, which improves structural rigidity by standing and densely stacking multiple cylindrical battery cells, and a cell frame surrounding the same.

Meanwhile, in a battery pack, multiple battery cells and a busbar (or metal plate) may be electrically connected to each other by wires using the so-called wire bonding method. When an event occurs in the battery cell and a high current exceeding the allowable current flows, the wires of the battery pack may be open to prevent the event from progressing in the battery cell, and this function is called a fusing function.

However, conventional battery packs, which are produced by applying wire bonding and have a fusing function, have a very low allowable current, making them difficult to use in electrical devices that require high-power current. Therefore, there is an urgent need to develop a battery pack capable of high-power discharge while reliably maintaining the fusing function by applying wire bonding.

### DISCLOSURE

### Technical Problem

The present disclosure is designed to solve the problems of the related art, and therefore the present disclosure is directed to providing a battery pack capable of effectively performing high-power discharge while a connecting wire smoothly performs a fusing function, and an electrical device including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells including a first electrode and a second electrode; a cell frame configured to support and store the plurality of battery cells; a power busbar disposed at an outermost region on one side of the cell frame, and electrically connected to the battery cells in one direction by a plurality of connecting wires; and a power busbar seating portion including a power busbar guide rib protruding in one direction to guide the seating of the power busbar, and configured such that the power busbar is seated thereon, wherein one surface of the power busbar and one end of the power busbar guide rib may have the same height.

The connecting wire connected to the power busbar may be bent twice.

The power busbar may be electrically connected to the second electrode of each of the battery cells by the plurality of connecting wires.

The power busbar may be electrically connected to the first electrode of each of the battery cells by the plurality of connecting wires.

The battery pack according to the present disclosure may further include a sub-busbar disposed inward from the power busbar on one side of the cell frame, and electrically connected to the battery cells in one direction and the other direction by a plurality of connecting wires, wherein one surface of the power busbar may be positioned higher than one surface of the sub-busbar.

The battery pack according to the present disclosure may further include a sub-busbar seating portion on which the sub-busbar is seated, and the power busbar and the sub-busbar may have the same thickness, and one surface of the power busbar seating portion may be positioned higher than one surface of the sub-busbar seating portion.

The battery pack according to the present disclosure may further include a sub-busbar seating portion on which the sub-busbar is seated, and one surface of the sub-busbar seating portion may have the same height as one surface of the power busbar seating portion, and the power busbar may have a thickness greater than that of the sub-busbar.

The power busbar may include a protruding region protruding toward the battery cell, and a recessed region recessed toward the battery cell, and the protruding region may include a protrusion formed therein to protrude toward the first electrode, and the recessed region may include an enlarged portion formed therein to be enlarged toward the first electrode.

The power busbar may include a protruding region protruding toward the battery cell, and a recessed region recessed toward the battery cell, and the protruding region may include an extension portion formed therein to extend toward the second electrode.

The power busbar may be configured to extend in one direction and the other direction, and may include an electrode exposure portion configured to expose the first electrode or the second electrode to the outside at a longitudinal end of the power busbar.

The battery pack according to the present disclosure may include: a sub-busbar disposed inward from the power busbar on one side of the cell frame, and electrically connected to the battery cells in the one direction and the other direction by a plurality of connecting wires; and a sub-busbar seating portion including a sub-busbar guide rib protruding in one direction to guide the seating of the sub-busbar, and configured such that the sub-busbar is seated thereon, wherein one surface of the sub-busbar and one end of the sub-busbar guide rib have the same height.

The connecting wire connected to the sub-busbar may be bent twice.

The sub-busbar may be electrically connected to the second electrode of each of the battery cells disposed at one side thereof by the plurality of connecting wires, and may be electrically connected to the first electrode of each of the battery cells disposed at the other side thereof by the plurality of the connecting wires.

The sub-busbar may include a protruding region protruding toward the battery cell, and a recessed region recessed toward the battery cell, and the protruding region may include a protrusion formed therein to protrude toward the first electrode, and the recessed region may include an enlarged portion formed therein to be enlarged toward the first electrode.

The sub-busbar may include a protruding region protruding toward the battery cell, and a recessed region recessed toward the battery cell, and the protruding region may include an extension portion formed therein to extend toward the second electrode.

The sub-busbar may be configured to extend in one direction and the other direction, and may include an electrode exposure portion configured to expose the first electrode or the second electrode to the outside at a longitudinal end of the sub-busbar.

In another aspect of the present disclosure, there is provided an electrical device including at least one battery pack according to the present disclosure.

### Advantageous Effects

According to the present disclosure, it is possible to provide a battery pack capable of effectively performing high-power discharge while the connecting wire smoothly performs a fusing function by means of a power busbar and a power busbar seating portion, and an electrical device including the same.

In addition, it is possible to provide a battery pack capable of more effectively performing high-power discharge because the power busbar is electrically connected to a specific electrode of the battery cell by a plurality of connecting wires, and an electrical device including the same.

In addition, it is possible to provide a battery pack capable of further reducing the length of a connecting wire connecting the power busbar and the battery cell according to the characteristic shape of the power busbar, and an electrical device including the same.

In addition, it is possible to provide a battery pack capable of effectively preventing, when the interior of a cell frame is filled with resin, the resin from overflowing to the outside of the cell frame by means of the power busbar and the power busbar seating portion, and an electrical device including the same.

In addition, it is possible to provide a battery pack capable of effectively performing high-power discharge while the connecting wire effectively executes a fusing function, by the sub-busbar and the sub-busbar seating portion, and an electrical device including the same.

In addition, it is possible to provide a battery pack capable of more effectively performing high-power discharge because the sub-busbar is electrically connected to a specific electrode of a battery cell by a plurality of connecting wires, and an electrical device including the same.

In addition, it is possible to provide a battery pack capable of further reducing the length of the connecting wire connecting the sub-busbar and the battery cell due to the characteristic shape of the sub-busbar, and an electrical device including the same.

In addition, it is possible to provide a battery pack with improved versatility and compatibility because the electrical connection structure of the connecting wire can be designed differently, and an electrical device including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view illustrating a battery pack according to an embodiment of the present disclosure.
FIG. 2 is an exploded perspective view illustrating a battery pack according to an embodiment of the present disclosure.
FIG. 3 is an enlarged perspective view illustrating a battery cell of a battery pack according to an embodiment of the present disclosure.
FIG. 4 is an overall plan view illustrating a battery pack according to an embodiment of the present disclosure.
FIG. 5 is a cross-sectional view illustrating a part taken along line I - I' in FIG. 4.
FIG. 6 is a cross-sectional view illustrating a part of a conventional battery pack where a power busbar is disposed.
FIG. 7 is an enlarged plan view illustrating area A shown in FIG. 4.
FIG. 8 is an enlarged plan view illustrating a power busbar of a conventional battery.
FIG. 9 is a plan view illustrating a modification of the configuration in FIG. 7 to explain a battery pack according to another embodiment of the present disclosure.
FIG. 10 is a cross-sectional view taken along line I - I' shown in FIG. 4.
FIG. 11 is a cross-sectional view illustrating a modification of the configuration in FIG. 10 to explain a battery pack according to a modified example of an embodiment of the present disclosure.
FIG. 12 is an enlarged plan view illustrating a power busbar of a battery pack according to an embodiment of the present disclosure.
FIG. 13 is an enlarged perspective view illustrating area B in FIG. 12.
FIG. 14 is a cross-sectional view taken along line II - II' shown in FIG. 4.
FIG. 15 is an enlarged plan view illustrating area C shown in FIG. 4.
FIG. 16 is an enlarged plan view illustrating a sub-busbar of a conventional battery.
FIG. 17 is a plan view illustrating a modification of the configuration in FIG. 15 to explain a battery pack according to another embodiment of the present disclosure.
FIG. 18 is an enlarged plan view illustrating a sub-busbar of a battery pack according to an embodiment of the present disclosure.
FIG. 19 is a diagram illustrating an electrical device according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

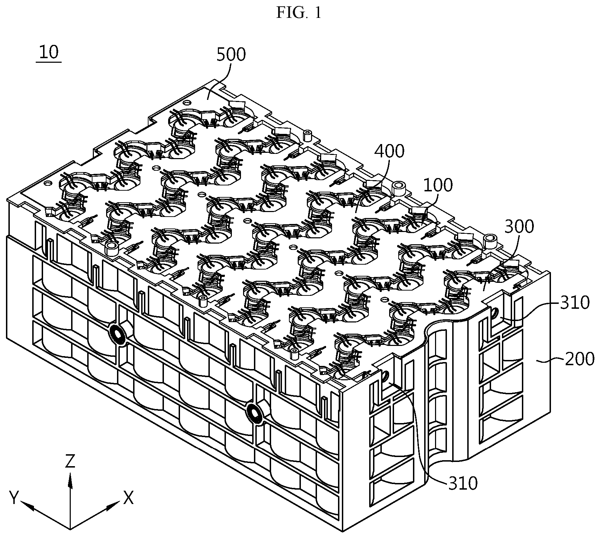

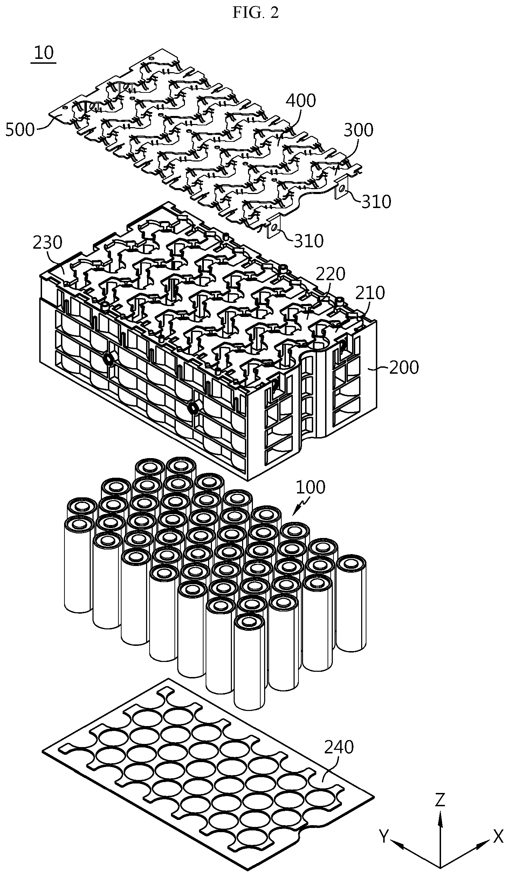

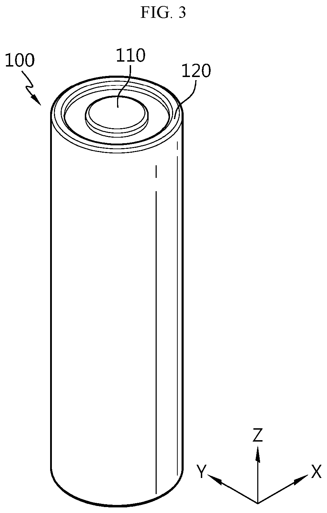

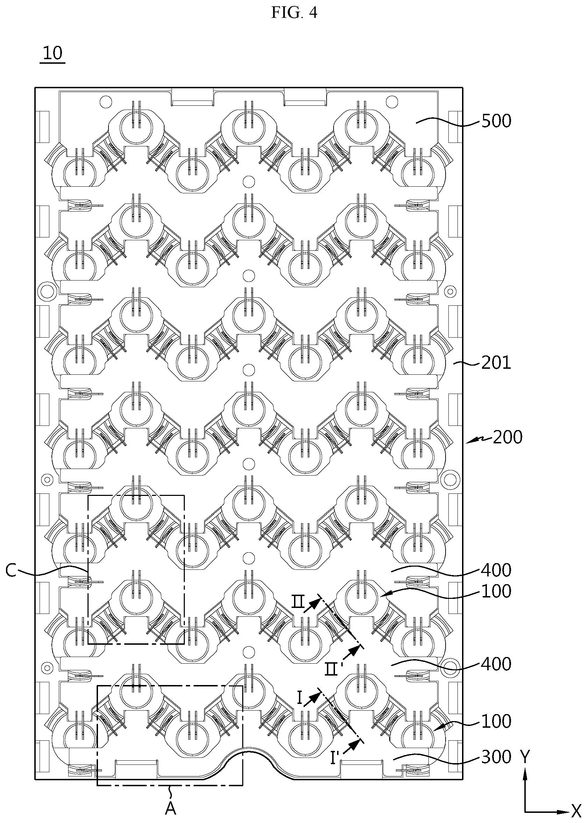

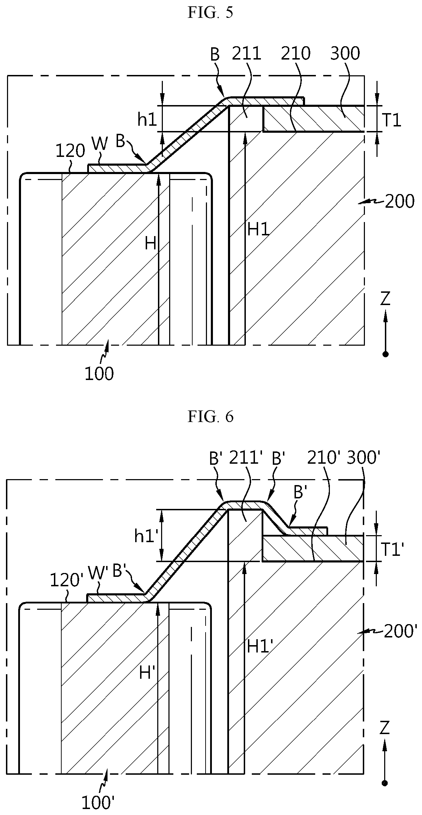

FIG. 1 is an overall perspective view illustrating a battery pack according to an embodiment of the present disclosure, FIG. 2 is an exploded perspective view illustrating a battery pack according to an embodiment of the present disclosure, FIG. 3 is an enlarged perspective view illustrating a battery cell of a battery pack according to an embodiment of the present disclosure, FIG. 4 is an overall plan view illustrating a battery pack according to an embodiment of the present disclosure, FIG. 5 is a cross-sectional view illustrating a part taken along line I - I' in FIG. 4, and FIG. 6 is a cross-sectional view illustrating a part of a conventional battery pack where a power busbar is disposed.

Hereinafter, a battery pack 10 according to an embodiment of the present disclosure will be described in detail with reference to FIGS. 1 to 6. The battery pack 10 according to an embodiment of the present disclosure may include a plurality of battery cells 100, a cell frame 200, a power busbar 300, a power busbar seating portion 210, and a power busbar guide rib 211.

The battery pack 10 may be provided in a three-dimensional structure having a predetermined width and length in the X-axis and Y-axis directions, respectively, and a predetermined height in the Z-axis direction.

A plurality of battery cells 100 may be provided. The battery cell 100 is a secondary battery, and may be configured as a cylindrical secondary battery, a pouch-type secondary battery, or a prismatic secondary battery. Hereinafter, although, in the present embodiment, a plurality of battery cells 100 are described as being provided as cylindrical secondary batteries, the disclosure is not limited thereto, and a pouch-type secondary battery or prismatic secondary battery may be applied to the battery cell 100.

The battery cell 100 may include a first electrode 110 and a second electrode 120. The first electrode 110 and the second electrode 120 may have different polarities. For example, the first electrode 110 may have a positive polarity, and the second electrode 120 may have a negative polarity. Both the first electrode 110 and the second electrode 120 may be located on one side of the battery cell 100. For example, the first electrode 110 and the second electrode 120 may be disposed on the upper side of the battery cell 100 or on the +Z-axis direction side. For example, the first electrode 110 may be disposed at the upper center of the battery cell 100, and the second electrode 120 may be disposed along the upper edge of the battery cell 100 so as to surround the first electrode 110.

The cell frame 200 may be configured to support and store a plurality of battery cells 100. In the cell frame 200, the plurality of battery cells 100 may be arranged in a horizontal direction parallel to the X-Y plane while standing in the Z-axis direction. An empty space may be formed inside the cell frame 200 to support and store the plurality of battery cells 100.

The power busbar 300 may be a busbar disposed at an outermost region of the cell frame 200. For example, the power busbar 300 may be disposed on the upper side of the cell frame 200 or on the +Z-axis direction side. For example, the power busbar 300 may be disposed in a portion biased toward the -Y-axis direction on one side of the cell frame 200. For reference, a connecting busbar 500, which will be described later, may be disposed in a portion biased toward the +Y-axis direction on one side of the cell frame 200, and at least one sub-busbar 400, which will be described later, may be disposed between the power busbar 300 and the connecting busbar 500.

The power busbar 300 may be electrically connected to the battery cells 100 in one direction. For example, a plurality of battery cells 100 may be electrically connected to the +Y-axis direction side of the power busbar 300. The power busbar 300 may be connected to a power terminal 310. The power terminal 310 may be, for example, a terminal disposed on the -Y-axis direction side, or may be a so-called HV (High Voltage) terminal that may be electrically connected to external electrical devices requiring power. A relatively high-power current may flow in the power busbar 300.

The power busbar 300 may be electrically connected to the battery cells 100 in one direction by a plurality of connecting wires W. The connecting wire W may be welded to the power busbar 300 and the battery cell 100. The connecting wire W may include a conductive material. For example, the connecting wire W may be a wire including a metal material. Accordingly, in the battery pack 10 according to the present disclosure, the plurality of battery cells 100 and the power busbar 300 may be electrically connected by the so-called wire bonding method. The connecting wire W may perform a fusing function. When a specific event occurs in a battery cell 100 and a high current exceeding a predetermined allowable current (hereinafter, fusing current) flows, the connecting wire W may be disconnected to prevent the battery cell 100 from proceeding with the specific event, which may be called a fusing function. Through the fusing function, the battery cell 100 may be prevented from igniting. Meanwhile, the connecting wire W may electrically connect the sub-busbar 400, which will be described below, and the battery cells 100, and electrically connect the connecting busbar 500,which will be described below, and the battery cells 100.

The power busbar seating portion 210 may be configured such that the power busbar 300 is seated thereon. The power busbar 300 may be disposed in an outermost region of the cell frame 200 as described above, and the power busbar seating portion 210 may be disposed in an outermost region of the cell frame 200. The power busbar seating portion 210 may be a part of the cell frame 200. The power busbar seating portion 210 may be provided to be integral with the cell frame 200. The power busbar 300 may be seated on the power busbar seating portion 210 from above or +Z-axis direction side.

The power busbar seating portion 210 may have a power busbar guide rib 211. The power busbar guide rib 211 may protrude from the power busbar seating portion 210 in one direction. For example, the power busbar guide rib 211 may protrude from the power busbar seating portion 210 upward or in the +Z-axis direction. The power busbar guide rib 211 may protrude from at least a portion of the edge of the power busbar seating portion 210.

One surface of the power busbar 300 and one end of the power busbar guide rib 211 may have the same height. For example, the upper surface of the power busbar 300 and the upper end of the power busbar guide rib 211 may have the same height. Specifically, in the cell frame 200, in a case where the height of the upper surface of the power busbar seating portion 210, excluding the power busbar guide rib 211, is H1, where the height of the power busbar guide rib 211 is h1, where the thickness of the power busbar 300 is T1, and where h1 and T1 are equal, h1 + H1, which is the height of the upper end of the power busbar guide rib 211, may be equal to T1 + H1, which is the height of the upper surface of the power busbar 300.

The height (h1 + H1) of the upper end of the power busbar guide rib 211 and the height (T1 + H1) of the upper surface of the power busbar 300 may be configured to be greater than the height H of the upper end of the battery cell 100. That is, the power busbar 300 may be provided at a higher position than the battery cell 100. Due to this, when the interior of the battery pack 10 is filled with resin, the resin may be prevented from overflowing from the battery pack 10.

The connecting wire W may be electrically connected from the power busbar 300 to the battery cell 100 via the power busbar guide rib 211. As described above, the battery cell 100 may be positioned lower than the power busbar 300, and as in this case, when there is a height difference between the battery cell 100 and the power busbar 300, the connecting wire W inevitably must be bent. The length of the connecting wire W increases as the degree of bending (e.g., the angle of bending) becomes increases or the number of bends increases. When the length of the connecting wire W increases, the electrical resistance increases, which may make it vulnerable to high-power discharge.

In the conventional battery pack, the height (h1' + H1') of one end of the power busbar guide rib 211' is greater than the height (T1' + H1') of one surface of the power busbar 300'. This is due to the fact that the conventional battery pack was developed such that the height (h1' + H1') of one end of the power busbar guide rib 211' increases to prevent the resin from overflowing to the outside of the cell frame 200' when the interior of the cell frame 200' is filled with resin. However, research and development on the power busbar seating portion 210' and the power busbar 300' were underperforming. Accordingly, the connecting wire W' of the conventional battery pack is bent severely from the power busbar 300' to the battery cell 100' via the power busbar guide rib 211', and the number of bends(refer to a part pointed to by B') is large, so its length must be relatively long. In addition, when welding the connecting wire W' to the battery cell 100' and the power busbar 300', the length of the welding area must be secured to a certain level or more, and there is a structural limitation to reducing the gap between the battery cell 100' and the power busbar 300', so the conventional battery pack has limitations to shortening the length of the connecting wire W'. Therefore, the connecting wire W' of the conventional battery pack has to be relatively long, and as a result, its electric resistance increases, so the fusing current is also lower. As a result, the conventional battery pack is not suitable for high-power discharge (see FIG. 6).

However, in the battery pack 10 according to the present disclosure, since one surface of the power busbar 300 and one end of the power busbar guide rib 211 have the same height, the degree of bending and the number of bends(refer to a part pointed to by B) of the connecting wire W from the power busbar 300 to the battery cell 100 via the power busbar guide rib 211 may be minimized, and thus its length may be minimized. In addition, since the welding portion of the connecting wire W to the power busbar 300 may be closer to the power busbar guide rib, the length of the connecting wire W may be further minimized. As the length of the connecting wire W is minimized as described above, the electrical resistance of the connecting wire W may also be minimized, so that the battery pack 10 according to the present disclosure may be highly suitable for high-power discharge, compared to the conventional battery pack. That is, the battery pack 10 according to the present disclosure may have an increased fusing current of the connecting wire W corresponding to the shortened length of the connecting wire W, thereby providing a remarkable advantage of effectively performing high-power discharge while smoothly performing the fusing function of the connecting wire W.

For example, in the conventional battery pack, the minimum length of the mass-produced connecting wire W' may be 10mm, and the fusing current value for the 10mm-long connecting wire W' may be approximately 41.5A. However, in the battery pack 10 according to the present disclosure, the minimum length of the mass-produced connecting wire W may be reduced to 6mm to 7mm under the same conditions of thickness, material, or the like. When the length of the connecting wire W is 6mm, the fusing current may be approximately 51.3A, which is increased by approximately 23.6% compared to the conventional one, and when the length of the connecting wire W is 7mm, the fusing current may be approximately 56.2A, which is increased by approximately 35.4% compared to the conventional one. If the electrical device requires a high-power discharge of 50A or more, the conventional battery pack will be disconnected at a current lower than 50A, but the battery pack according to the present disclosure may comfortably satisfy a high-power discharge of 50A or more.

The connecting wire W connected to the power busbar 300 may be bent twice. Specifically, it may be bent once at the power busbar guide rib 211 and once more in a portion connected to the battery cell 100. The connecting wire W may be welded to the power busbar 300 and the battery cell 100. When the connecting wire W is bent twice and connected to the power busbar 300 and the battery cell 100 as described above, the length of the connecting wire W may be minimized.

In the conventional battery pack, since the height (h1' + H1') of one end of the power busbar guide rib 211' is greater than the height (T1' + H1') of one surface of the power busbar 300', the connecting wire W' is bent at least three or four times, for example, once from the power busbar 300' toward the power busbar guide rib 211', once or twice at the power busbar guide rib 211', and once more at the battery cell 100'. Even when the connecting wire W' is bent three times, the degree of bending is particularly severe at the side of the power busbar guide rib 211', thereby inevitably increasing the length of the connecting wire W'.

However, since the connecting wire W of the battery pack 10 according to the present disclosure is bent only twice in the section from the power busbar 300 to the battery cell 100 via the power busbar guide rib 211, the length of the connecting wire W may be further minimized, so that the high-power discharge of the battery pack 10 may be more effectively performed.

Meanwhile, the connecting wire W may be welded to the battery cell 100, the sub-busbar 400 described below, and the connecting busbar 500 described below.

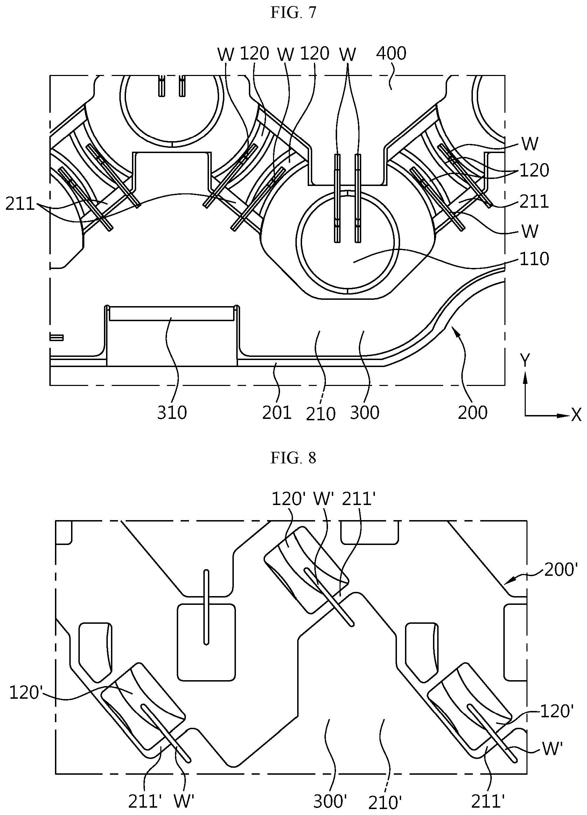

FIG. 7 is an enlarged plan view illustrating area A shown in FIG. 4, and FIG. 8 is an enlarged plan view illustrating a power busbar of a conventional battery.

Hereinafter, the power busbar 300 of the battery pack 10 according to an embodiment of the present disclosure will be described in more detail with reference to FIGS. 7 and 8.

According to an embodiment of the present disclosure, the power busbar 300 of the battery pack 10 may be electrically connected to the second electrode 120 of each of the battery cells 100 by a plurality of connecting wires W. Specifically, the power busbar 300 may be electrically connected to a plurality of battery cells 100 in one direction, and a plurality of connecting wires W may be connected to the respective second electrodes 120 of the plurality of battery cells 100. For example, the second electrode 120 of each battery cell 100 may be electrically connected to the power busbar 300 by two connecting wires W, as illustrated in the drawing. All of the connecting wires W may be connected to the second electrodes 120 from the power busbar 300 via the power busbar guide ribs 211.

Two connecting wires W connected to the second electrode 120 of each battery cell 100 may be disposed relatively far apart from each other at different locations. The connecting wire W connecting the second electrode 120 of one of two adjacent battery cells 100 and the power busbar 300 may be disposed adjacent to the connecting wire W connecting the second electrode 120 of the other battery cell 100 and the power busbar 300.

In the conventional battery pack, the power busbar 300' is electrically connected to the second electrode 120' of each battery cell by one connecting wire W'. This is due to the fact that the second electrode 120' has to be exposed in a narrow area due to a configuration such as a cell frame 200'. In addition, when designing the busbar, the number or area of exposed electrode portions has to be limited in consideration of an increase in electrical resistance or temperature. However, in the case of the battery pack 10 according to the present disclosure, since a configuration such as a cell frame 200 is not disposed between the power busbar 300 and the sub-busbar 400, which will be described later, not only may the second electrode 120 of the battery cell 100 be exposed over a much wider area, but all the second electrodes 120 of two adjacent battery cells 100 may also be exposed in a common area. Accordingly, the plurality of connecting wires W may be easily connected to the second electrodes 120 of the battery cells 100, respectively (see FIG. 8).

As described above, when the power busbar 300 is electrically connected to each second electrode 120 of the battery cells 100 by the plurality of connecting wires W, the electrical resistance between the power busbar 300 and the second electrode 120 may be significantly reduced, compared to the conventional battery pack in which the power busbar 300 is electrically connected to each second electrode 120 of the battery cells 100 by one connecting wire W. This is due to the fact that the cross-sectional area of the current path between the power busbar 300 and the second electrode 120 increases. As a result, the high-power discharge of the battery pack 10 may be more effectively performed.

For example, assuming that the length of the connecting wire W or W' is 10mm, the fusing current of the connecting wire W' in the conventional battery pack in which one connecting wire W' is connected to each battery cell may be approximately 41.5A. However, according to the battery pack 10 of the present disclosure in which two connecting wires W are connected to each battery cell 100, the fusing current may be about 83.0A, which is about double that of the conventional one.

In the battery pack 10 according to the present disclosure, the length of the connecting wire W may be shortened as described above, and a plurality of connecting wires W may be connected to each second electrode 120 of the battery cell 100.

For example, in the conventional battery pack, in a case where one connecting wire W' having a length of 10mm is connected to each battery cell, the fusing current of the connecting wire W' may be 41.5A. However, in the battery pack 10 of the present disclosure, the length of the connecting wire W may be shortened to, for example, 8mm, and two connecting wires W may be connected to each battery cell 100, and in this case, the fusing current of the connecting wires W may be about 94.8A, which is about 2.28 times that of the conventional one.

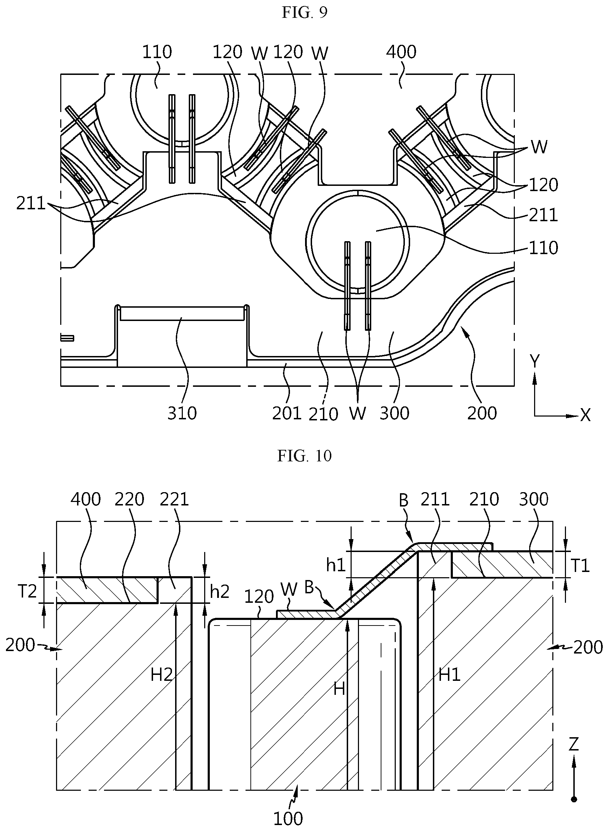

FIG. 9 is a plan view illustrating a modification of the configuration in FIG. 7 to explain a battery pack according to another embodiment of the present disclosure.

Hereinafter, a power busbar 300 of a battery pack 10 according to another embodiment of the present disclosure will be described in detail with reference to FIG. 9.

The power busbar 300 of the battery pack 10 according to another embodiment of the present disclosure may be electrically connected to each first electrode 110 of the battery cell 100 by a plurality of connecting wires W. In other words, compared to the battery pack 10 according to an embodiment of the present disclosure, the remaining components such as the battery cell 100, the cell frame 200, the power busbar 300, and the power busbar seating portion 210, excluding the arrangement and connection structure of the wires, may be configured in the same manner. Specifically, the power busbar 300 may be electrically connected to a plurality of battery cells 100 in one direction, and a plurality of connecting wires W may be connected to the first electrode 110 of each of the plurality of battery cells 100. For example, the first electrode 110 of each battery cell 100 may be electrically connected to the power busbar 300 by two connecting wires W, as illustrated in the drawing.

The two connecting wires W connected to the first electrode 110 of each battery cell 100 may be disposed adjacent to each other.

As described above, in a case where the power busbar 300 is electrically connected to the first electrode 110 of each battery cell 100 by the plurality of connecting wires W, the electrical resistance between the power busbar 300 and the first electrode 110 may be reduced compared to the case where the power busbar 300 is electrically connected to the first electrode 110 of each battery cell 100 by one connecting wire W. This is due to the fact that the cross-sectional area of the current path between the power busbar 300 and the first electrode 110 increases. As a result, high-power discharge of the battery pack 10 may be performed more effectively. In addition, as described above, the overall electrical connection structure of the battery pack 10 may be designed differently by changing only the arrangement and connection structure of the connecting wires W while maintaining the remaining configurations, so that the overall electrical connection structure of the battery pack 10 may be altered very easily, and thus the versatility and compatibility of the battery pack 10 may be improved.

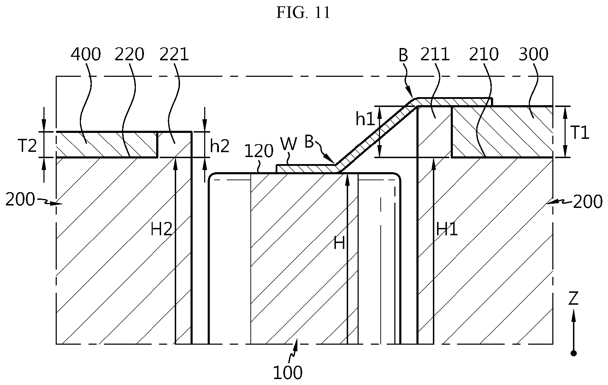

FIG. 10 is a cross-sectional view taken along line I - I' shown in FIG. 4, and FIG. 11 is a cross-sectional view illustrating a modification of the configuration in FIG. 10 to explain a battery pack according to a modified example of an embodiment of the present disclosure.

Hereinafter, the battery pack 10 according to an embodiment of the present disclosure will be described in more detail with reference to FIGS. 10 and 11.

The battery pack 10 according to an embodiment of the present disclosure may further include a sub-busbar 400. The sub-busbar 400 may be a busbar disposed inward from the power busbar 300 on one side of the cell frame 200. For example, the sub-busbar 400 may be disposed on the upper side of the cell frame 200 or on the +Z-axis direction side. For example, the sub-busbar 400 may be disposed between the power busbar 300 and a connecting busbar 500, which will be described later, on one side of the cell frame 200. One or more sub-busbars 400 may be provided.

The sub-busbar 400 may be electrically connected to the battery cells 100 in one direction and the other direction. For example, a plurality of battery cells 100 may be electrically connected to the +Y-axis direction side and the -Y-axis direction side of the sub-busbar 400, respectively. The plurality of battery cells 100 of the battery pack 10 may be connected in series and parallel to each other by the sub-busbar 400 and the connecting busbar 500 described later, and the plurality of battery cells 100 may be finally electrically connected to the power busbar 300.

The sub-busbar 400 may be electrically connected to the battery cells 100 in both directions by a plurality of connecting wires W. The connecting wire W connected to the sub-busbar 400 may be configured to be substantially the same as the connecting wire W connected to the power busbar 300 described above. The connecting wire W connected to the sub-busbar 400 may perform a fusing function, similar to the connecting wire W connected to the power busbar 300.

One surface of the power busbar 300 may be positioned higher than one surface of the sub-busbar 400. For example, the upper surface of the power busbar 300 may be positioned higher than the upper surface of the sub-busbar 400.

As described above, in a case where one surface of the power busbar 300 is positioned higher than one surface of the sub-busbar 400, there is an advantage in which, when the interior of the battery pack 10 is filled with resin, the resin may be prevented from overflowing from the interior of the battery pack 10 to the outermost area.

In particular, referring to FIG. 10, the battery pack 10 according to an embodiment of the present disclosure may further include a sub-busbar seating portion 220. The sub-busbar seating portion 220 may be configured such that the sub-busbar 400 is seated thereon. The sub-busbar seating portion 220 may be disposed inward from the power busbar seating portion 210 on one side of the cell frame 200. The sub-busbar seating portion 220 may be a portion of the cell frame 200. The sub-busbar seating portion 220 may be configured to be integral with the cell frame 200. The sub-busbar 400 may be seated on the sub-busbar seating portion 220 from above or the +Z-axis direction side.

The power busbar 300 and the sub-busbar 400 may have the same thickness. That is, the thickness T1 of the power busbar 300 and the thickness T2 of the sub-busbar 400 may be the same. In addition, one surface of the power busbar seating portion 210 may be positioned higher than one surface of the sub-busbar seating portion 220. For example, the height H1 of the upper surface of the power busbar seating portion 210 may be greater than the height H2 of the upper surface of the sub-busbar seating portion 220. As a result, the height (T1 + H1) of the upper surface of the power busbar 300 may be greater than the height (T2 + H2) of the upper surface of the sub-busbar 400.

As described above, if the thicknesses of the power busbar 300 and the sub-busbar 400 are the same, it is easy to manufacture the power busbar 300 and the sub-busbar 400 at once using a single plate, thereby improving the productivity of the battery pack 10.

Meanwhile, the sub-busbar seating portion 220 may include a sub-busbar guide rib 221. The sub-busbar guide rib 221 may protrude from the sub-busbar seating portion 220 in one direction. For example, the sub-busbar guide rib 221 may protrude from the sub-busbar seating portion 220 upward or in the +Z-axis direction. The sub-busbar guide rib 221 may protrude from at least a portion of the edge of the sub-busbar seating portion 220.

In particular, referring to FIG. 11, in a battery pack 10 according to a modified example of an embodiment of the present disclosure, one surface of the sub-busbar seating portion 220 may have the same height as one surface of the power busbar seating portion 210, and the power busbar 300 may have a greater thickness than the sub-busbar 400. For example, the height H1 of the upper surface of the power busbar seating portion 210 may be the same as the height H2 of the upper surface of the sub-busbar seating portion 220, and the thickness T1 of the power busbar 300 may be greater than the thickness T2 of the sub-busbar 400. As a result, the height (T1 + H1) of the upper surface of the power busbar 300 may be greater than the height (T2 + H2) of the upper surface of the sub-busbar 400.

As described above, in a case where the power busbar 300 has a thickness greater than that of the sub-busbar 400, the cross-sectional area of the current path inside the power busbar 300 may increase, so that high-power discharge of the battery pack 10 may be performed more effectively.

Referring back to FIGS. 1, 2, and 4, the connecting busbar 500 will be described in detail. The battery pack 10 according to the present disclosure may further include a connecting busbar 500. The connecting busbar 500 may be disposed on one side of the cell frame 200 in the outermost region away from the power busbar 300. The connecting busbar 500 may be electrically connected to a plurality of battery cells 100 in one direction. The connecting busbar 500 and the battery cells 100 may be electrically connected to each other by connecting wires W. The connecting busbar 500 may have a connecting terminal (not shown) that may be electrically connected to another battery pack 10. The cell frame 200 may include a connecting-busbar seating portion 230 on which the connecting busbar 500 is seated.

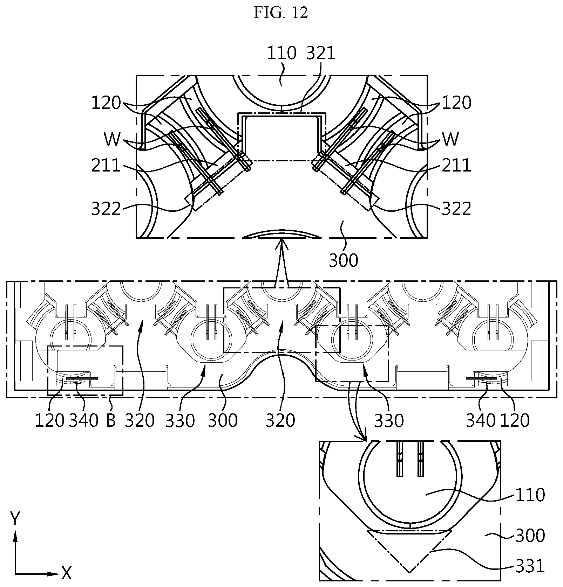

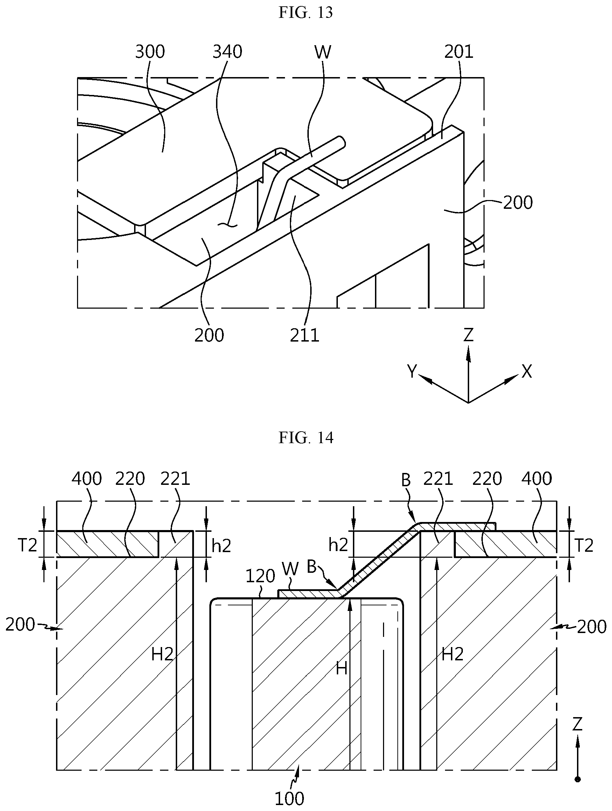

FIG. 12 is an enlarged plan view illustrating a power busbar of a battery pack according to an embodiment of the present disclosure, and FIG. 13 is an enlarged perspective view illustrating area B in FIG. 12.

Hereinafter, the power busbar 300 of the battery pack 10 according to an embodiment of the present disclosure will be described in more detail with reference to FIGS. 12 and 13.

The power busbar 300 may have a protruding region 320 and a recessed region 330. The protruding region 320 may be a region protruding toward the battery cell 100. Specifically, the protruding region 320 may be a region protruding toward the battery cell 100 connected to one side (e.g., +Y-axis direction side) of the power busbar 300. The recessed region 330 may be a region recessed toward the battery cell 100. Specifically, the recessed region 330 may be a region recessed toward the battery cell 100 connected to one side of the power busbar 300. The protruding regions 320 and the recessed regions 330 may be alternately formed along one side of the power busbar 300.

A protrusion 321 may be formed in the protruding region 320. The protrusion 321 may be a portion protruding from the protruding region 320 toward the first electrode 110 of the battery cell 100. An enlarged portion 331 may be formed in the recessed region 330. The enlarged portion 331 may be a portion enlarged from the recessed region 330 toward the first electrode 110 of the battery cell 100.

As previously discussed in FIG. 7, the power busbar 300 according to another embodiment of the present disclosure may be electrically connected to the first electrode 110 of the battery cell 100 by the connecting wires W. In this case, when the protrusion 321 and the enlarged portion 331 are provided in the power busbar 300 as described above, the gap between the power busbar 300 and the first electrode 110 may be reduced, so that the length of the connecting wire W connecting the power busbar 300 and the first electrode 110 may also be reduced. As a result, the high-power discharge of the battery pack 10 may be performed more effectively.

An extension portion 322 may be formed in the protruding region 320 of the power busbar 300. The extension portion 322 may be a portion that extends from the protruding region 320 toward the second electrode 120 of the battery cell 100. The extension portion 322 may be connected to the protrusion 321 and may be spaced apart from the enlarged portion 331. The power busbar 300 according to an embodiment of the present disclosure may be electrically connected to the second electrode 120 of the battery cell 100 by the connecting wire W. In a case where the extension portion 322 is formed on the power busbar 300 as described above, the gap between the power busbar 300 and the second electrode 120 may be reduced, so that the length of the connecting wire W connecting the power busbar 300 and the second electrode 120 may also be reduced. As a result, the high-power discharge of the battery pack 10 may be performed more effectively.

The power busbar 300 may include an electrode exposure portion 340. Specifically, the power busbar 300 may extend in one direction and the other direction, and the electrode exposure portion 340 may expose the first electrode 110 or the second electrode 120 to the outside at the longitudinal ends of the power busbar 300. For example, the power busbar 300 may extend in the X-axis direction, and the electrode exposure portion 340 may be provided on at least one of both ends of the power busbar 300 in the X-direction. The electrode exposure portion 340 may expose, for example, the second electrode 120 to the outside.

A power busbar guide rib 211 may be further disposed on the electrode exposure portion 340. The connecting wire W may be connected from the power busbar 300 via the power busbar guide rib 211 to the first electrode 110 or the second electrode 120 of the battery cell 100 exposed through the electrode exposure portion 340. As described above, one end of the power busbar guide rib 211 described herein may also have the same height as one surface of the power busbar 300. In addition, the power busbar guide rib 211 described herein may prevent resin from overflowing when filling the battery pack 10.

Since the electrode exposure portion 340 is provided in the power busbar 300, the connecting wire W may be further disposed on the battery cell 100 connected to the outermost side (for example, the outermost side in the X-axis direction), so that high-power discharge of the battery pack 10 may be more easily performed.

FIG. 14 is a cross-sectional view taken along line II - II' shown in FIG. 4.

Hereinafter, the sub-busbar of the battery pack according to an embodiment of the present disclosure will be described in detail with reference to FIG. 14.

The sub-busbar seating portion 220 may have a sub-busbar guide rib 221. The sub-busbar guide rib 221 may protrude from the sub-busbar seating portion 220 in one direction. For example, the sub-busbar guide rib 221 may protrude from the sub-busbar seating portion 220 upward or in the +Z-axis direction. The sub-busbar guide rib 221 may protrude from at least a portion of the edge of the sub-busbar seating portion 220.

One surface of the sub-busbar 400 and one end of the sub-busbar guide rib 221 may have the same height. For example, the upper surface of the sub-busbar 400 and the upper end of the sub-busbar guide rib 221 may have the same height. Specifically, in the cell frame200, in a case where the height to the upper surface of the sub-busbar seating portion 220, excluding the sub-busbar guide rib 221, is H2, where the height of the sub-busbar guide rib 221 is h2, where the thickness of the sub-busbar 400 is T2, and where h2 and T2 are the same, h2 + H2 corresponding to the height of the upper end of the sub-busbar guide rib 221 may be equal to T2 + H2 corresponding to the height of the upper surface of the sub-busbar 400.

When the sub-busbar 400 and the sub-busbar guide rib 221 are configured as described above, the number of bends of the connecting wire W may be minimized from the sub-busbar 400 to the battery cell 100 via the sub-busbar guide rib 221, so that the connecting wire W may be connected with the shortest distance. Therefore, the battery pack 10 according to the present disclosure may have the advantage of effectively performing highoutput discharge while the connecting wire W smoothly performs the fusing function.

For example, the connecting wire of the conventional battery pack may have a length of 10mm and a fusing current of about 41.5A, whereas the connecting wire W of the battery pack 10 according to the present disclosure may have a length of 6mm to 7mm and a fusing current of about 51.3A to about 56.2A.

The connecting wire W connected to the sub-busbar 400 may be bent twice. Specifically, it may be bent once at the sub-busbar guide rib 221 and once more at the portion connected to the battery cell 100. In this case, the length of the connecting wire W connecting the sub-busbar 400 and the battery cell 100 may be further minimized, so that the high-power discharge of the battery pack 10 may be more effectively performed.

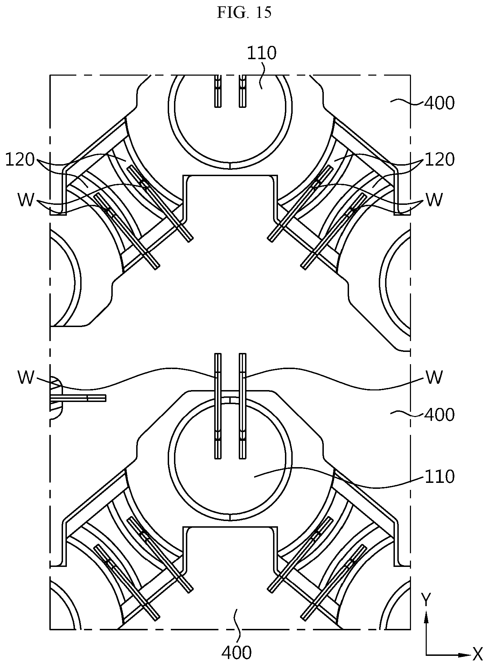

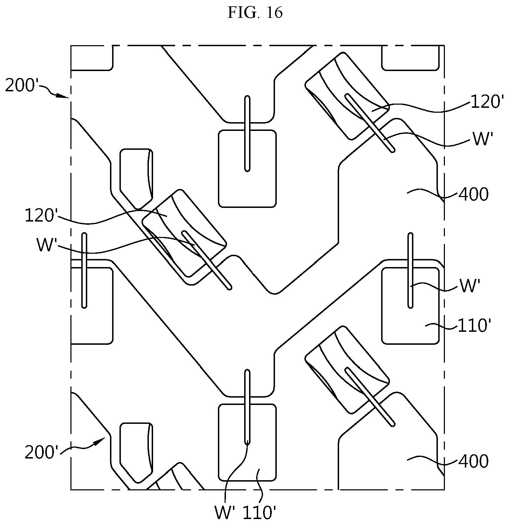

FIG. 15 is an enlarged plan view illustrating area C shown in FIG. 4, and FIG. 16 is an enlarged plan view illustrating a sub-busbar of a conventional battery.

Hereinafter, the sub-busbar 400 of the battery pack 10 according to an embodiment of the present disclosure will be described in more detail with reference to FIGS. 15 and 16.

The sub-busbar 400 may be electrically connected to the second electrode 120 of each of the battery cells 100 disposed at its one side by a plurality of connecting wires W. For example, the sub-busbar 400 may be electrically connected to the second electrode 120 of each of the battery cells 100 disposed at the +Y-axis direction side by two connecting wires W. The sub-busbar 400 may be electrically connected to the first electrode 110 of each of the battery cells 100 disposed at the other side by a plurality of connecting wires W. For example, the sub-busbar 400 may be electrically connected to the first electrode 110 of each of the battery cells 100 disposed at the -Y-axis direction side by two connecting wires W.

In the conventional battery pack, the sub-busbar 400' is electrically connected to the first or second electrode 110' or 120' of each battery cell by one connecting wire W'. This is due to the fact that the first or second electrode 110' or 120' has to be exposed in a narrow area due to a configuration such as the cell frame 200'. In addition, when designing the busbar, the number or area of exposed electrode portions has to be limited in consideration of an increase in electrical resistance or temperature. However, in the case of the battery pack 10 according to the present disclosure, since a configuration such as the cell frame 200 is not disposed between the power busbar 300 and the sub-busbar 400 or between the sub-busbars 400, not only may the first or second electrode 110 or 120 of the battery cell 100 be exposed over a much wider area, but all the second electrodes 120 of two adjacent battery cells 100 may also be exposed in a common area. Accordingly, the plurality of connecting wires W may be easily connected to the second electrodes 110 or 120 of the battery cells 100, respectively (see FIG. 16).

As described above, when the sub-busbar 400 is electrically connected to each battery by the plurality of connecting wires W at one side and the other side, the cross-sectional area of the current path between the sub-busbar 400 and the battery cell 100 may increase, so that the electrical resistance between the sub-busbar 400 and the battery cell 100 may be reduced. As a result, the high-power discharge of the battery pack 10 may be performed more effectively.

For example, assuming that the length of the connecting wire W or W' is 10mm, the fusing current of the connecting wire W' in the conventional battery pack in which one connecting wire W' is connected to each battery cell may be approximately 41.5A. However, according to the battery pack 10 of the present disclosure in which two connecting wires W are connected to each battery cell 100, the fusing current may be about 83.0A, which is about double that of the conventional one.

In the battery pack 10 according to the present disclosure, as the length of the connecting wire W is shortened as described above, a plurality of connecting wires W may be connected to the first or second electrode 110 or 120 of each battery cell 100.

For example, in the conventional battery pack, in a case where one connecting wire W' having a length of 10mm is connected to each battery cell, the fusing current of the connecting wire W' may be 41.5A. However, in the battery pack 10 of the present disclosure, the length of the connecting wire W may be shortened to, for example, 8mm, and two connecting wires W may be connected to each battery cell 100, and in this case, the fusing current of the connecting wires W may be about 94.8A, which is about 2.28 times that of the conventional one.

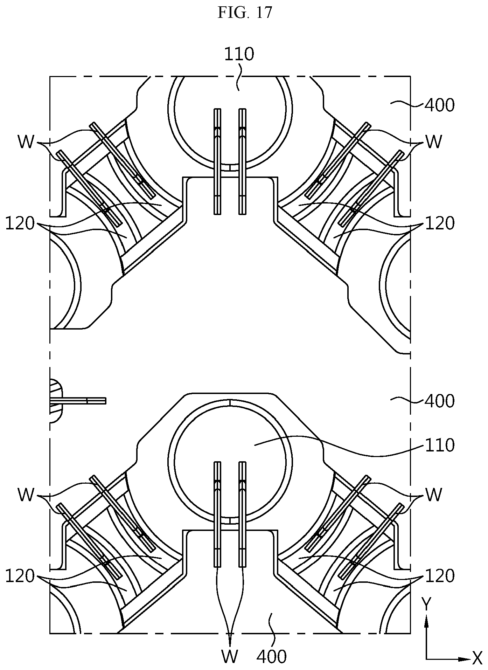

FIG. 17 is a plan view illustrating a modification of the configuration in FIG. 15 to explain a battery pack according to another embodiment of the present disclosure.

Hereinafter, a sub-busbar 400 of a battery pack 10 according to another embodiment of the present disclosure will be described in detail with reference to FIG. 17.

In the battery pack 10 according to another embodiment of the present disclosure, as illustrated in FIG. 14, the first electrode 110 of each of the battery cells 100 disposed at one side (e.g., +Y-axis direction side) of the sub-busbar 400 may be electrically connected to the sub-busbar 400 by a plurality of connecting wires W. In addition, the second electrode 120 of each of the battery cells 100 positioned at the other side (e.g., -Y-axis direction side) of the sub-busbar 400 may be electrically connected to the sub-busbar 400 by a plurality of connecting wires W.

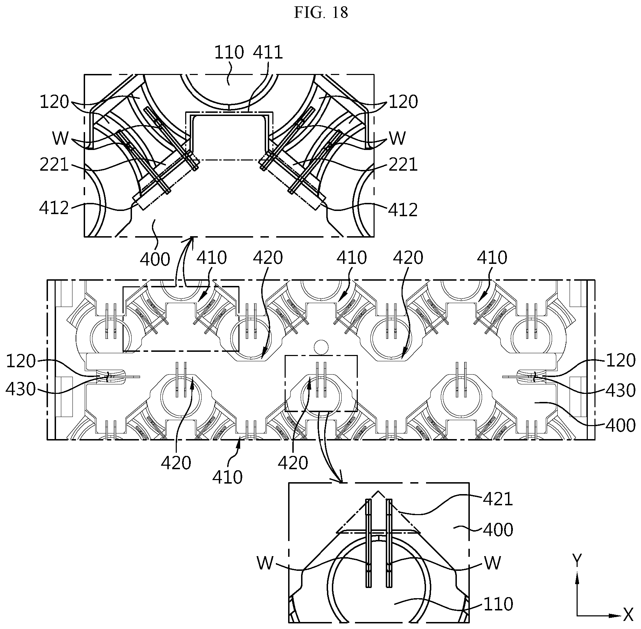

FIG. 18 is an enlarged plan view illustrating a sub-busbar of a battery pack according to an embodiment of the present disclosure.

Hereinafter, the sub-busbar 400 according to an embodiment of the present disclosure will be described in more detail with reference to FIG. 18.

The sub-busbar 400 may have a protruding region 410 and a recessed region 420. The protruding region 410 may be a region protruding toward a battery cell 100. Specifically, the protruding region 410 may be a region protruding toward a battery cell 100 connected to one side (e.g., +Y-axis direction side) or the other side (e.g., -Y-axis direction side) of the sub-busbar 400. The recessed region 420 may be a region recessed toward a battery cell 100. Specifically, the recessed region 420 may be a region recessed toward a battery cell 100 connected to one side or the other side of the sub-busbar 400. The protruding regions 410 and the recessed regions 420 may be formed alternately on one side and the other side of the sub-busbar 400, respectively.

A protrusion 411 may be formed in the protruding region 410. The protrusion 411 may be a portion protruding from the protruding region 410 toward the first electrode 110 of the battery cell 100. An enlarged portion 421 may be formed in the recessed region 420. The enlarged portion 421 may be a portion enlarged from the recessed region 420 toward the first electrode 110 of the battery cell 100.

As described above, when the sub-busbar 400 includes the protrusion 411 and the enlarged portion 421, the gap between the first electrode 110 of the battery cell 100 and the sub-busbar 400 may be reduced, so that the length of the connecting wire W connecting the two components may also be reduced, and thus, the high-power discharge of the battery pack 10 may be performed more effectively.

An extension portion 412 may be formed in the protruding region 410 of the sub-busbar 400. The extension portion 412 may be a portion that extends from the protruding region 410 toward the second electrode 120 of the battery cell 100. The extension portion 412 may be connected to the protrusion 411 and may be spaced apart from the enlarged portion 421. In a case where the extension portion 412 is formed in the sub-busbar 400, the gap between the sub-busbar 400 and the second electrode 120 may be reduced, so that the length of the connecting wire W connecting the two components may also be reduced, and thus, the high-power discharge of the battery pack 10 may be performed more effectively.

The sub-busbar 400 may include an electrode exposure portion 430. Specifically, the sub-busbar 400 may extend, and the electrode exposure portion 430 may expose the first electrode 110 or the second electrode 120 to the outside at a longitudinal end (e.g., X-axis direction end) of the sub-busbar 400. For example, the electrode exposure portion 430 may expose, for example, the second electrode 120 to the outside through at least one of both ends of the sub-busbar 400 in the X-axis direction.

As the electrode exposure portion 430 is provided in the sub-busbar 400, a connecting wire W may be further disposed in the battery cell 100 connected to the outermost side (for example, the outermost side in the X-axis direction), so that high-power discharge of the battery pack 10 may be more easily performed.

The cell frame 200 may further include a bottom plate 240 that forms a bottom to support a plurality of battery cells 100 (see FIG. 1).

An edge portion 201 may be provided on one edge of the cell frame 200. For example, an edge portion 201 that surrounds the entire cell frame 200 along the edge and protrudes upward to a predetermined height may be disposed on the upper edge of the cell frame 200. The edge portion 201 may prevent the resin filled inside the battery pack 10 from overflowing to the outermost side of the battery pack 10 (see FIG. 4).

Preferred examples of the battery pack 10 according to the present disclosure have been described above. The technical idea of the present disclosure is not limited to these examples, and may encompass a combination of two or more of them.

Although not shown in the drawings, the battery pack 10 according to the present disclosure may further include various devices for controlling the charging and discharging of the battery cells 100, such as a BMS (Battery Management System), a current sensor, and a fuse.

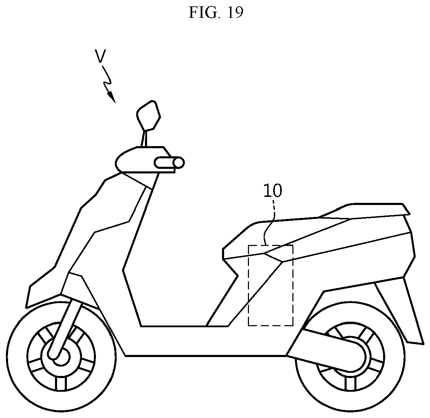

FIG. 19 is a diagram illustrating an electrical device according to an embodiment of the present disclosure.

Referring to FIG. 19, the battery pack 10 according to the present disclosure may be applied to electrical devices V. The electrical device V may run on the power supplied from the battery pack 10 according to the present disclosure. The electrical devices V may be LEVs (Light Electric Vehicles). Examples of LEVs may include e-motorcycle vehicles, e-bikes, e-scooters, and electric golf carts. The electrical devices V may also be electric vehicles or hybrid vehicles.

In addition, the battery pack 10 according to an embodiment of the present disclosure may also be provided, in addition to the electrical devices V, in other devices, apparatuses, and facilities, such as energy storage systems using secondary batteries.

Although terms indicating directions such as up(ward), down(ward), left, right, front(ward), and back(ward) directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
100: Battery cell
110: First electrode
120: Second electrode
200: Cell frame
201: Edge portion
210: Power busbar seating portion
211: Power busbar guide rib
220: Sub-busbar seating portion
221: Sub-busbar guide rib
230: Connecting busbar seating portion
240: Bottom plate
300: Power busbar
310: Power terminal
320: Protruding region
321: Protrusion
322: Extension portion
330: Recessed region
331: Enlarged portion
340: Electrode exposure portion
400: Sub-busbar
410: Protruding region
411: Protrusion
412: Extension portion
420: Recessed region
421: Enlarged portion
430: Electrode exposure portion
500: Connecting busbar
W: Wire
V: Electrical devices

## Claims

1. A battery pack comprising:
a plurality of battery cells comprising a first electrode and a second electrode;
a cell frame configured to support and store the plurality of battery cells;
a power busbar disposed at an outermost region on one side of the cell frame, and electrically connected to the battery cells in one direction by a plurality of connecting wires; and
a power busbar seating portion comprising a power busbar guide rib protruding in one direction to guide the seating of the power busbar, and configured such that the power busbar is seated thereon,
wherein one surface of the power busbar and one end of the power busbar guide rib have the same height.

2. The battery pack according to claim 1,
wherein the connecting wire connected to the power busbar is bent twice.

3. The battery pack according to claim 1,
wherein the power busbar
is electrically connected to the second electrode of each of the battery cells by the plurality of connecting wires.

4. The battery pack according to claim 1,
wherein the power busbar
is electrically connected to the first electrode of each of the battery cells by the plurality of connecting wires.

5. The battery pack according to claim 1,
further comprising a sub-busbar disposed inward from the power busbar on one side of the cell frame, and electrically connected to the battery cells in one direction and the other direction by a plurality of connecting wires,
wherein one surface of the power busbar
is positioned higher than one surface of the sub-busbar.

6. The battery pack according to claim 5,
further comprising a sub-busbar seating portion on which the sub-busbar is seated,
wherein the power busbar and the sub-busbar
have the same thickness, and
wherein one surface of the power busbar seating portion is positioned higher than one surface of the sub-busbar seating portion.

7. The battery pack according to claim 5,
further comprising a sub-busbar seating portion on which the sub-busbar is seated,
wherein one surface of the sub-busbar seating portion
has the same height as one surface of the power busbar seating portion, and
wherein the power busbar
has a thickness greater than that of the sub-busbar.

8. The battery pack according to claim 1,
wherein the power busbar comprises
a protruding region protruding toward the battery cell, and a recessed region recessed toward the battery cell,
wherein the protruding region
comprises a protrusion formed therein to protrude toward the first electrode, and
wherein the recessed region
comprises an enlarged portion formed therein to be enlarged toward the first electrode.

9. The battery pack according to claim 1,
wherein the power busbar comprises
a protruding region protruding toward the battery cell, and a recessed region recessed toward the battery cell, and
wherein the protruding region
comprises an extension portion formed therein to extend toward the second electrode.

10. The battery pack according to claim 1,
wherein the power busbar
is configured to extend in one direction and the other direction, and
comprises an electrode exposure portion configured to expose the first electrode or the second electrode to the outside at a longitudinal end of the power busbar.

11. The battery pack according to claim 1, comprising:
a sub-busbar disposed inward from the power busbar on one side of the cell frame, and electrically connected to the battery cells in the one direction and the other direction by a plurality of connecting wires; and
a sub-busbar seating portion comprising a sub-busbar guide rib protruding in one direction to guide the seating of the sub-busbar, and configured such that the sub-busbar is seated thereon,
wherein one surface of the sub-busbar and one end of the sub-busbar guide rib have the same height.

12. The battery pack according to claim 11,
wherein the connecting wire connected to the sub-busbar
is bent twice.

13. The battery pack according to claim 11,
wherein the sub-busbar
is electrically connected to the second electrode of each of the battery cells disposed at one side thereof by the plurality of connecting wires, and
is electrically connected to the first electrode of each of the battery cells disposed at the other side thereof by the plurality of the connecting wires.

14. The battery pack according to claim 11,
wherein the sub-busbar comprises
a protruding region protruding toward the battery cell, and a recessed region recessed toward the battery cell,
wherein the protruding region
comprises a protrusion formed therein to protrude toward the first electrode, and
wherein the recessed region
comprises an enlarged portion formed therein to be enlarged toward the first electrode.

15. The battery pack according to claim 11,
wherein the sub-busbar comprises
a protruding region protruding toward the battery cell, and a recessed region recessed toward the battery cell, and
wherein the protruding region
comprises an extension portion formed therein to extend toward the second electrode.

16. The battery pack according to claim 11,
wherein the sub-busbar
is configured to extend in one direction and the other direction, and
comprises an electrode exposure portion configured to expose the first electrode or the second electrode to the outside at a longitudinal end of the sub-busbar.

17. An electrical device comprising at least one battery pack according to any one of claims 1 to 16.
